# EUROPEAN PATENT APPLICATION

(11) **EP 2 362 592 A1**
(43) Date of publication of application: **31.08.2011**
(21) Application number: 10154872.5
(22) Date of filing: 26.02.2010
(51) Int. Cl.: H04L 12/58, G06Q 10/00

(54) **Automatic deletion of electronic messages**

(71) Applicant: RESEARCH IN MOTION LIMITED, Waterloo, Ontario N2L 3W8 (CA)
(72) Inventor: Logan, Adrian, Waterloo Ontario N2L 5Z5 (CA); Garg, Neeraj, Waterloo Ontario N2L 5Z5 (CA)
(74) Representative: Rickard, David John

(57) **Abstract**

A system and method are provided for automatically deleting messages such as e-mail upon consumption by the recipient. Consumption by the recipient may include viewing the message, forwarding or replying to the message, or archiving, saving, copying, or moving the message. An indicator is inserted in the message, for example in the message header or body, indicating that the message is to be deleted upon detection of a triggering consumption action. Upon receipt at the recipient's mail client, the client determines whether the indicator is present, and, upon detection of a triggering consumption action, automatically closes any views of the message displayed by the recipient's mail client and deletes the message. Optionally a warning is provided to the recipient prior to deletion.

## Description

The present application relates generally to security of e-mail and other electronic communications, and specifically to automatic deletion of messages.

Electronic communications such as e-mail over networks such as the Internet are a popular means of communication. To enhance the security of e-mail communications, it is generally known in the art to apply encryption, such as public key encryption, to ensure that messages are read only by those authorized to read the message though possession of the appropriate key to decrypt the message. It is also known to provide encrypted means for transmitting communications over networks, such as Transport Layer Security (TLS) and Secure Sockets Layer (SSL) technology, which encrypt portions of the network over which a message is transmitted.

While these measures provide for a degree of privacy and security of the message while in transit, once the electronic message is received by the recipient, the sender typically loses control over how the message is dealt with by the recipient. The sender may only wish the recipient to be in possession of the message for a specific period of time, but the recipient may choose to retain the message in his or her message store beyond that period. Or, the recipient may forward the message (in a decrypted state, if the message was originally encrypted) to others who were not intended by the sender to receive a copy of the message.

### General

It is desirable to provide the sender with additional control over messages, such as e-mail messages, after they have been received by a recipient. The embodiments described herein may provide a system and method for automatic deletion of a message after receipt by the recipient and upon consumption of the message by the recipient.

These embodiments will be described in relation to a mobile wireless communication device, hereafter referred to as a communication device, for sending and receiving electronic messages such as e-mail messages, and associated servers for receiving and forwarding messages to and from the communication device. It will be appreciated by those skilled in the art, however, that this description is not intended to limit the scope of the described embodiments to the communication devices described below or to e-mail messages. The methods and systems described herein may be applied to any appropriate communication or data processing device, whether portable or wirelessly enabled or not, including without limitation cellular phones, smartphones, wireless organizers, personal digital assistants, desktop computers, terminals, laptops, tablets, handheld wireless communication devices, wirelessly-enabled notebook computers and the like, and to any appropriate electronic communication, such as e-mail, IM, and the like.

### Brief Description of the Drawings

In drawings which illustrate by way of example only embodiments of the present application,

FIG. 1 is a block diagram of an embodiment of a mobile device.

FIG. 2 is a block diagram of an embodiment of a communication subsystem component of the mobile device of FIG. 1.

FIG. 3 is an exemplary block diagram of a node of a wireless network for use with the mobile device of FIG. 1.

FIG. 4 is a block diagram illustrating components of a host system in one exemplary configuration for use with the wireless network of FIG. 3 and the mobile device of FIG. 1.

FIG. 5 is a schematic diagram of a network for transmission of a message.

FIGS. 6A through 6D are flowcharts illustrating transmission of a message from a sender's communication device to a recipient's message server.

FIG. 7 is a flowchart illustrating a method for handling and deleting a message by a recipient's mail client.

FIG. 8 is a flowchart illustrating a method for testing a recipient's mail client for automatic deletion functionality.

### Description of Preferred Embodiments

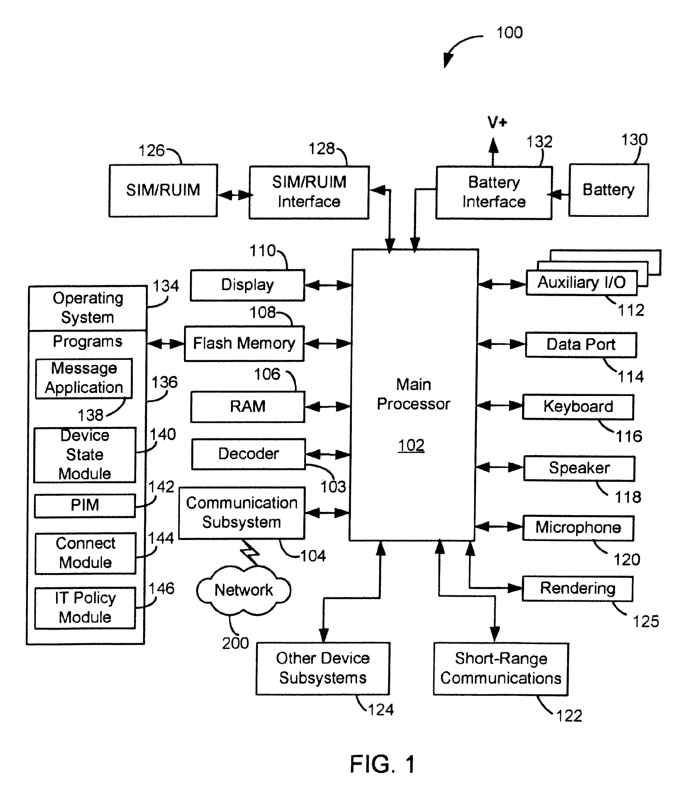

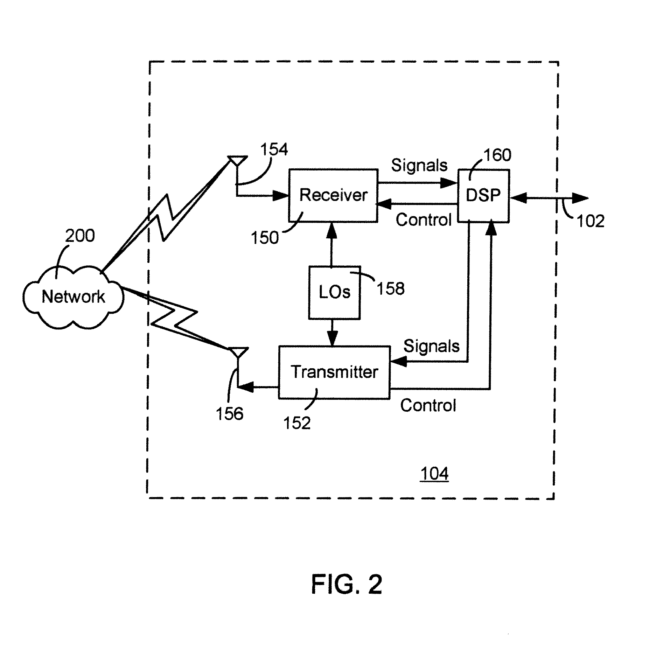

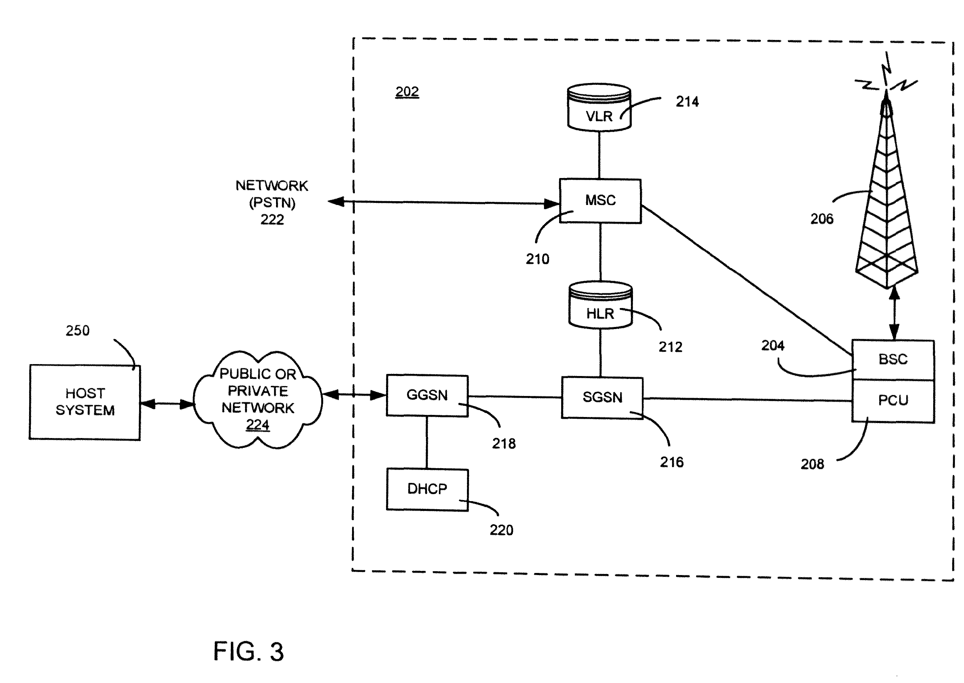

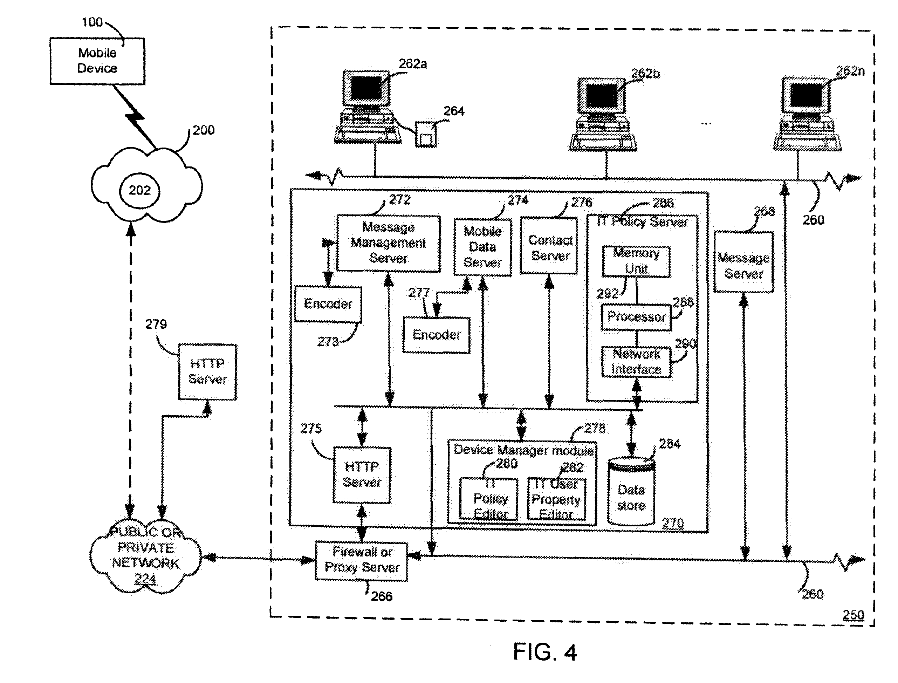

The embodiments described herein may be implemented on a communication device such as that illustrated in FIGS. 1 and 2. The communication device may communicate with other devices over a wireless communication system or enterprise system as illustrated in FIGS. 3 and 4. The communication device 100 may be a mobile device with two-way communication and advanced data communication capabilities including the capability to communicate with other mobile devices or computer systems through a network of transceiver stations. The communication device 100 can also have voice communication capabilities.

FIG. 1 is a block diagram of an exemplary embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE and UMTS. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering circuit 125 may be implemented as hardware, software, or as a combination of both hardware and software.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system.

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the communication device 100 to allow the communication device 100 to use any number of services associated with the enterprise system. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 is preferably an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

FIG. 2 shows an exemplary block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the communication device 100 and the wireless network 200 can contain one or more different channels, typically different RF channels, and associated protocols used between the communication device 100 and the wireless network 200. An RF channel is a limited resource that should be conserved, typically due to limits in overall bandwidth and limited battery power of the communication device 100. When the communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

FIG. 3 is a block diagram of an exemplary implementation of a node 202 of the wireless network 200. In practice, the wireless network 200 comprises one or more nodes 202. In conjunction with the connect module 144, the communication device 100 can communicate with the node 202 within the wireless network 200. In the exemplary implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the communication device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the communication device 100 in accordance with particular, usually predetermined, communication protocols and parameters, under control of its controller. The fixed transceiver equipment similarly demodulates and possibly decodes and decrypts, if necessary, any communication signals received from the communication device 100 within its cell. Communication protocols and parameters can vary between different nodes. For example, one node can employ a different modulation scheme and operate at different frequencies than other nodes.

For all communication devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each communication device 100. The SGSN 216 also performs security functions and access control for data traffic on the wireless network 200. The GGSN 218 provides internetworking connections with external packet switched networks and connects to one or more SGSNs 216 via an Internet Protocol (IP) backbone network operated within the network 200. During normal operations, a given communication device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a communication device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each communication device 100 must be assigned to one or more APNs and communication devices 100 cannot exchange data without first performing a GPRS Attach to an APN that it has been authorized to use. The APN can be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (Ipsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a communication device 100 is not using its PDP Context, the PDP Context can be de-allocated and the IP address returned to the IP address pool managed by the DHCP server 220.

FIG. 4 is a block diagram illustrating components of an exemplary configuration of a host system 250 with which the communication device 100 can communicate in conjunction with the connect module 144. The host system 250 will typically be a corporate enterprise or other local area network (LAN), but can also be a home office computer or some other private system, for example, in variant implementations. In the example shown in FIG. 4, the host system 250 is depicted as a LAN of an organization to which a user of the communication device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's communication device 100 is situated on a LAN connection. The cradle 264 for the communication device 100 can be coupled to the computer 262a by a serial or a Universal Serial Bus (USB) connection, for example. Other user computers 262b-262n are also situated on the network 260, and each can be equipped with an accompanying cradle 264. The cradle 264 facilitates the loading of information (e.g. PIM data, private symmetric encryption keys to facilitate secure communications) from the user computer 262a to the communication device 100, and can be particularly useful for bulk information updates often performed in initializing the communication device 100 for use. The information downloaded to the communication device 100 can include certificates used in the exchange of messages.

It will be understood by persons skilled in the art that the user computers 262a-262n are typically also connected to other peripheral devices, such as printers, etc., which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this exemplary configuration. More generally, the host system 250 can represent a smaller part of a larger network (not shown) of the organization, and can comprise different components and/or be arranged in different topologies than that shown in the exemplary embodiment of FIG. 4.

To facilitate the operation of the communication device 100 and the wireless communication of messages and message-related data between the communication device 100 and components of the host system 250, a number of wireless communication support components 270 can be provided. In some implementations, the wireless communication support components 270 can include a message management server 272, a mobile data server 274, a web server, such as Hypertext Transfer Protocol (HTTP) server 275, a contact server 276, and a device manager module 278. HTTP servers can also be located outside the enterprise system, as indicated by the HTTP server 279 attached to the network 224. The device manager module 278 includes an IT Policy editor 280 and an IT user property editor 282, as well as other software components for allowing an IT administrator to configure the communication devices 100. In an alternative embodiment, there can be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the communication devices 100. The memory unit 292 can store functions used in implementing the IT policy as well as related data. Those skilled in the art know how to implement these various components. Other components can also be included as is well known to those skilled in the art. Further, in some implementations, the data store 284 can be part of any one of the servers.

In this exemplary embodiment, the communication device 100 communicates with the host system 250 through node 202 of the wireless network 200 and a shared network infrastructure 224 such as a service provider network or the public Internet. Access to the host system 250 can be provided through one or more routers (not shown), and computing devices of the host system 250 can operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the communication device 100. The wireless VPN router allows a VPN connection to be established directly through a specific wireless network to the communication device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the communication device 100 in this alternative implementation.

Messages intended for a user of the communication device 100 are initially received by a message server 268 of the host system 250. Such messages can originate from any number of sources. For instance, a message can have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™ server, a Novell Groupwise™ server, or another suitable mail server installed in a corporate environment. In some implementations, the host system 250 can comprise multiple message servers 268. The message server 268 can also be adapted to provide additional functions beyond message management, including the management of data associated with calendars and task lists, for example.

When messages are received by the message server 268, they are typically stored in a data store associated with the message server 268. In at least some embodiments, the data store can be a separate hardware unit, such as data store 284, with which the message server 268 communicates. Messages can be subsequently retrieved and delivered to users by accessing the message server 268. For instance, an e-mail client application operating on a user's computer 262a can request the e-mail messages associated with that user's account stored on the data store associated with the message server 268. These messages are then retrieved from the data store and stored locally on the computer 262a. The data store associated with the message server 268 can store copies of each message that is locally stored on the communication device 100. Alternatively, the data store associated with the message server 268 can store all of the messages for the user of the communication device 100 and only a smaller number of messages can be stored on the communication device 100 to conserve memory. For instance, the most recent messages (i.e. those received in the past two to three months for example) can be stored on the communication device 100.

When operating the communication device 100, the user may wish to have e-mail messages retrieved for delivery to the communication device 100. The message application 138 operating on the communication device 100 can also request messages associated with the user's account from the message server 268. The message application 138 can be configured (either by the user or by an administrator, possibly in accordance with an organization's IT policy) to make this request at the direction of the user, at some pre-defined time interval, or upon the occurrence of some pre-defined event. In some implementations, the communication device 100 is assigned its own e-mail address, and messages addressed specifically to the communication device 100 are automatically redirected to the communication device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the communication device 100. The message management server 272 also facilitates the handling of messages composed on the communication device 100, which are sent to the message server 268 for subsequent delivery.

For example, the message management server 272 can monitor the user's "mailbox" (e.g. the message store associated with the user's account on the message server 268) for new e-mail messages, and apply user-definable filters to new messages to determine if and how the messages are relayed to the user's communication device 100. The message management server 272 can also, through an encoder (not shown) associated therewith, compress message data, using any suitable compression/decompression technology (e.g. YK compression, JPEG, MPEG-x, H.26x, and other known techniques) and encrypt messages (e.g. using an encryption technique such as Data Encryption Standard (DES), Triple DES, or Advanced Encryption Standard (AES)), and push them to the communication device 100 via the shared network infrastructure 224 and the wireless network 200. The message management server 272 can also receive messages composed on the communication device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the communication device 100 can be defined (e.g. by an administrator in accordance with IT policy) and enforced by the message management server 272. These may include whether the communication device 100 can receive encrypted and/or signed messages, minimum encryption key sizes, whether outgoing messages must be encrypted and/or signed, and whether copies of all secure messages sent from the communication device 100 are to be sent to a pre-defined copy address, for example.

The message management server 272 can also be adapted to provide other control functions, such as only pushing certain message information or pre-defined portions (e.g. "blocks") of a message stored on the message server 268 to the communication device 100. For example, in some cases, when a message is initially retrieved by the communication device 100 from the message server 268, the message management server 272 can push only the first part of a message to the communication device 100, with the part being of a pre-defined size (e.g. 2 KB). The user can then request that more of the message be delivered in similar-sized blocks by the message management server 272 to the communication device 100, possibly up to a maximum pre-defined message size. Accordingly, the message management server 272 facilitates better control over the type of data and the amount of data that is communicated to the communication device 100, and can help to minimize potential waste of bandwidth or other resources.

The mobile data server 274 encompasses any other server that stores information that is relevant to the corporation. The mobile data server 274 can include, but is not limited to, databases, online data document repositories, customer relationship management (CRM) systems, or enterprise resource planning (ERP) applications. The mobile data server 274 can also connect to the Internet or other public network, through HTTP server 275 or other suitable web server such as a File Transfer Protocol (FTP) server, to retrieve HTTP webpages and other data. Requests for webpages are typically routed through mobile data server 274 and then to HTTP server 275, through suitable firewalls and other protective mechanisms. The web server then retrieves the webpage over the Internet, and returns it to mobile data server 274. As described above in relation to message management server 272, mobile data server 274 is typically provided, or associated, with an encoder 277 that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the communication device 100 via the shared network infrastructure 224 and the wireless network 200. While encoder 277 is only shown for mobile data server 274, it will be appreciated that each of message server 268, message management server 272, and HTTP servers 275 and 279 can also have an encoder associated therewith.

The contact server 276 can provide information for a list of contacts for the user in a similar fashion as the address book on the communication device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the HTTP server 275, the contact server 276, the device manager module 278, the data store 284 and the IT policy server 286 do not need to be implemented on separate physical servers within the host system 250. For example, some or all of the functions associated with the message management server 272 can be integrated with the message server 268, or some other server in the host system 250. Alternatively, the host system 250 can comprise multiple message management servers 272, particularly in variant implementations where a large number of mobile devices need to be supported.

The device manager module 278 provides an IT administrator with a graphical user interface with which the IT administrator interacts to configure various settings for the communication devices 100. As mentioned, the IT administrator can use IT policy rules to define behaviors of certain applications on the communication device 100 that are permitted such as phone, web browser or Instant Messenger use. The IT policy rules can also be used to set specific values for configuration settings that an organization requires on the communication devices 100 such as auto signature text, WLAN/VoIP/VPN configuration, security requirements (e.g. encryption algorithms, password rules, etc.), specifying themes or applications that are allowed to run on the communication device 100, and the like.

Rendering data files originally optimized or prepared for visualization on large-screen displays on a portable electronic device display often requires additional processing prior to visualization on the small-screen portable electronic device displays. According to an embodiment, this additional processing is accomplished by the rendering engine 125 shown in FIG. 1. As will be appreciated by those of skill in the art, the rendering engine can be implemented in hardware, software, or a combination thereof, and can comprise a dedicated image processor and associated circuitry, or can be implemented within main processor 102.

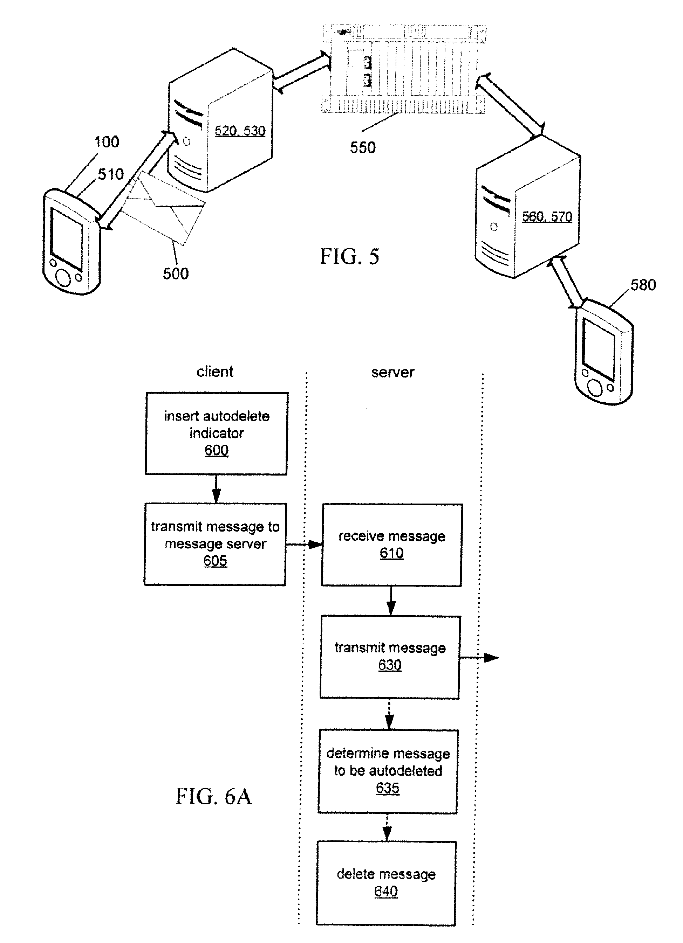

As mentioned above, the embodiments herein will be described in the context of a communication device 100 and e-mail messaging. Referring now to FIG. 5, the communication device 100 may include a mail user agent or mail client 510 executing on or controlled at the device for composing, addressing and formatting e-mail messages, and for transmitting and receiving messages to and from another station, such as a message submission agent 520 and/or a message transfer agent 530. The message submission agent and message transfer agent functionality may be provided by the same server, or may be co-located on the same machine. For example, one or both of these functions may be comprised in the message server 268 in communication with the communication device 100 over the shared network infrastructure 224 described above, although the communication device 10 may communicate instead with another message submission and/or transfer agent outside the network infrastructure 224.

When a message 500 is transmitted from the communication device 100 to the message submission agent and/or message transfer agent, the message transfer agent then sends the message 500 over a network to a receiving message transfer agent 560. En route to the receiving message transfer agent 560, the message 500, or its packets, if the message is transmitted in accordance with the IP protocol or another packet transmission protocol, may be received and forwarded by one or more intermediate stations between the sending message transfer agent 530 and the receiving message transfer agent 560. The intermediate stations are represented in FIG. 5 by router 550. Upon receipt of the message by message transfer agent 560, the message is forwarded to a message delivery agent 570. Again, the functions of the message transfer agent 560 and the message delivery agent 570 may be co-located on the same machine, and may be provided by a single receiving message server. The message 500 is then forwarded to the recipient's own mail user agent or mail client 580.

The general implementation, operation and use of user agents, submission, transfer and delivery agents, and the formatting transmission of messages over suitable networks, such as packet-switched Internet networks, will be known to those skilled in the art, including the implementation and use of such message transmission protocols as Simple Mail Transfer Protocol (SMTP), as defined in RFC 5321 and its predecessors, and transmission protocols such as TCP/IP and the like. The mail client 510 may be provided by a mail client application executing on the communication device 100, or by a client application or service provided on a web server or application server in communication with the communication device 100 over the network 224; the service may be provided via the HTTP server 279, or via the mobile data server 274. As is also known to those in the art, the mail client may implement one or more protocols for obtaining messages from the message transfer agent 530, such as Post Office Protocol (POP) as defined in RFC 1929 (POP Version 3) or Internet Message Access Protocol (IMAP) as defined in RFC 3501 (IMAP4revl), and in their predecessor Internet standards documents and versions. The description herein includes all such past and present implementations as well as message format, submission, transfer, and delivery protocols that may be developed in future.

As will be appreciated by those skilled in the art, once a message 500 is received at the mail client 580 of the recipient, the original sender of the message has virtually no control over how the message is dealt with by the recipient. Thus, for example, if the content of the message contained private or sensitive information intended for the recipient's review only, the sender has no means to ensure that the recipient does not transfer or forward the message to another person. It is generally known in the art to apply cryptographic techniques to messages, so as to encrypt the content of a message to protect the content in the event the message is intercepted by an unauthorized third party. For example, the communication device 100 may be configured to employ the S/MIME protocol as described in RFC 3156 and predecessor versions, such that e-mail messages received at and sent from the communication device are encrypted using a symmetric algorithm with an encrypted, random session key generated by the e-mail sender. The session key is encrypted using the recipient's public key, which may have been received by the sender's device directly from the recipient, or obtained from a certificate server maintained to distribute security certificates comprising public keys. When the recipient's communication device 100 receives an encrypted e-mail message, the communication device extracts the encrypted session key and decrypts it using the recipient's private key corresponding to the public key. Once the session key is decrypted, the communication device can decrypt the message. Thus, such encryption measures ensure that only those recipients who are in possession of the appropriate decryption key are able to decrypt the encrypted message. However, so long as the recipient is in possession of a copy of the message, and the means to decrypt the message, the recipient is able to deal with the contents of the message however he or she wishes, and such dealings are outside the control of the sender.

Accordingly, a system and method are provided in which the sender may designate a message as one that is to be automatically deleted upon detection of a triggering action at the recipient's mail client. The message may be designated as a message to be automatically deleted through use of an indicator inserted in the message. For example, if the message format is defined as a typical e-mail message in accordance with RFC 822 and successor and additional Internet standards, such as RFC 5322, known to those skilled in the art, the message will comprise at least a body and a header. The header will comprise a number of fields having names and values. An additional name-value header field indicating that the message is to be automatically deleted may be inserted into the header, for example auto-delete: yes **or** delete-on-consumption: yes. The name and value of the field may, of course, need not read exactly as in the foregoing examples, although the foregoing examples are easily human-readable and comprehensible. If the message is not to be deleted upon detection of the triggering action, then the field may be omitted, or the field may contain the value "no" (e.g., auto-delete: no or delete-on-consumption: no).

The body generally comprises the content of the message. Although it is convenient to insert the indicator in the message header, since the recipient's mail client would likely parse the header fields and present header field information separately from the message body, the indicator could instead be inserted into the message body, provided the recipient's mail client is configured to scan and identify the indicator in the message body. In that case, the indicator could still take a similar form as its format in the header, or it may be distinguished from the normal message content by a delimiter, such as a combination of ASCII characters that are less frequently used when composing messages. For example, an indicator such as <<<auto-delete : yes>>> may be inserted into the message. If the indicator is inserted near the beginning of the message content, it may serve an additional function of warning the recipient, when the message is read, that an automatic deletion will occur upon occurrence of a triggering event.

In other embodiments, the indicator may be included in an envelope or other ancillary information transmitted together with the message. For example, in accordance with the SMTP protocol, a message is delivered with envelope commands establishing information such as sender address, reply-to address, and other information; an additional envelope command directing any recipient of the message to automatically delete the message upon occurrence of a triggering event may be included. This embodiment may be useful when the message will be delivered to the recipient's mail client intact with the envelope deletion command; however, if it is possible that the envelope may be modified or stripped from the message before the message is delivered to the recipient, it may be preferable to insert the indicator into the message in a location where it is unlikely to be stripped out.

The indicator may be inserted either at the mail client or at the message server receiving the message from the mail client before transmission to the recipient's message transfer agent. Turning to FIG. 6A, if the indicator is inserted at the mail client at 600, the sender may select an option provided in the mail client application to insert the indicator into the message, or to insert the indicator into the message envelope when it is transmitted from the communication device 100. The mail client may alternatively be configured to automatically insert the indicator in every message generated and sent from the communication device, for example in accordance with an information technology (IT) or security policy established for the handling of messages at the communication device 100. The policy may establish that all messages to be sent outside the sender's domain, or all messages that are marked confidential, are to be marked with the indicator. The message, with indicator, would then be transmitted to a message submission agent and message transfer agent, which may be comprised, for example, in the message server 268. The message with indicator is then received by the server at 610, and from which point it may be forwarded on to the next destination at 630. The message server 268 may transmit the message with indicator directly to the recipient's message transfer agent or message delivery agent, or even directly to the recipient's own mail client, if the message server 268 serves the recipient's mail client. The message server 268 may alternatively transmit the message to another station en route to the recipient's message transfer agent over the Internet or another network.

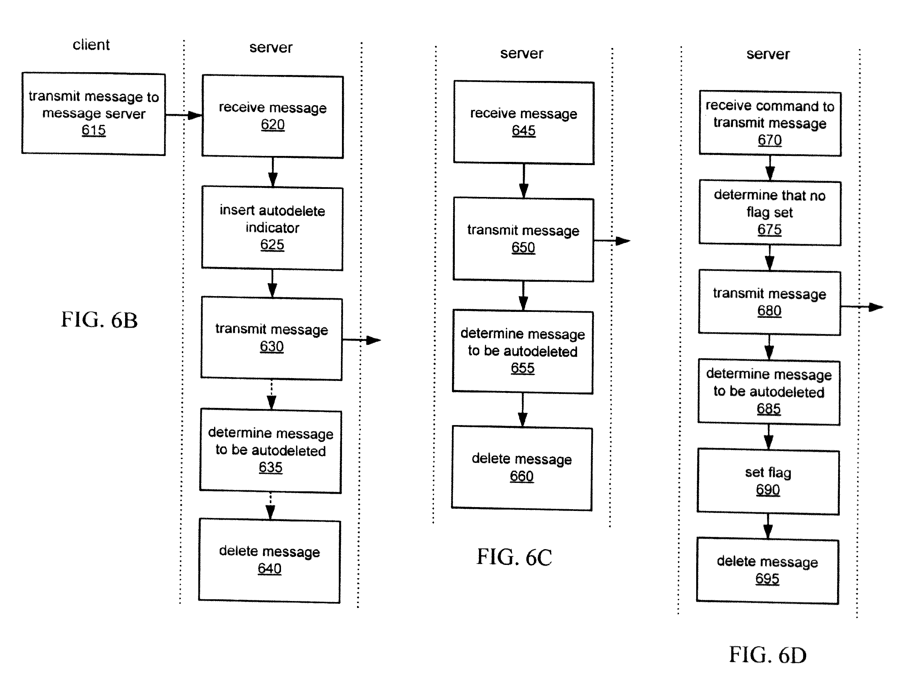

In another embodiment, the indicator may be inserted at the message server 268, for example by the message submission agent or message transfer agent. As shown in FIG. 6B, the sender's mail client transmits the message to the message server 268 at 615; at 620, the message server 268 receives the message, and at 625 inserts the indicator. Again, the message server 268 may insert the indicator in accordance with an IT or security policy implemented at the server. For example, all messages leaving the message server's domain or addressed to a recipient outside the enterprise with which the sender and message server 268 are associated may receive the indicator. At 630, the message server 268 transmits the message with indicator onward, as with the embodiment of FIG. 6A.

In either case, the message server 268 may be configured to automatically delete the copy of the message received from the mail client. In both FIGS. 6A and 6B, the message server 268 may determined at 635 that its copy of the message is to be deleted after transmission of the message, and therefore deletes the message at 640. The deletion may be a permanent or final deletion, and not merely marking the message for listing in a "recycle bin" or other holding location where documents intended to be deleted are held prior to final deletion. To enhance the privacy of the message, when the message server 268 deletes the message after transmission, the file containing the message may be overwritten or erased, rather than simply being marked for deletion. Overwriting or erasing the message discourages later recovery of the message from the message server's storage media.

If the message is received and forwarded by intermediate stations en route to the recipient's mail transfer agent or message server, each of the intermediate stations may be configured to automatically delete its copy of the message after it has forwarded the message on to the next intermediate or final destination. Turning to FIG. 6C, an intermediate station, such as a router or server, receives the message at 645, then transmits the message on to the next destination at 650. The next destination may be another router or server, or the recipient's mail transfer agent or message server. After transmission, the router or server may determine whether the message comprises the deletion indicator at 655. If the message does include the indicator, then at 660 the message is deleted from that router or server's storage media. Again, the message may be permanently deleted by overwriting or erasure.

Once the recipient's mail transfer agent and delivery agent receives the message with the deletion indicator, the server or servers comprising these agents may carry out the same transmission and deletion steps described in respect of FIG. 6C; the server may receive an explicit command from the recipient's mail client to transmit the message prior to the step of transmitting at 650. If the recipient's mail client and server are configured to delete messages from the server once they are transmitted to the recipient's mail client, such as in accordance with the POP3 protocol, deletion of messages transmitted to the recipient's mail client may be carried out automatically, so no express step of determining whether the message contains the indicator may be necessary.

On the other hand, if the mail client leaves messages on the mail server, which is an option implementable with POP3 and also with the IMAP protocol, then the mail server may expressly carry out the determining and deletion steps 655 and 660. In a further embodiment, the mail server may carry out additional steps to prevent a message with the deletion indicator to be downloaded to multiple clients on behalf of the recipient. Referring to FIG. 6D, after the message is received by the recipient's message server, the message server stores the message; once a command is received from a client to transmit the message to the client, the server determines whether there is a flag set in association with the message. As can be seen in the following description, the flag indicates that the message has already been transmitted to a client. If it is determined that no flag has been set at 675, then the message is transmitted to the client at 680. If a flag has been set, the message is not transmitted. After transmission, it is determined at 685 whether the message is to be deleted in accordance with the indicator; if so, then a flag is set at 690. The message is then deleted at 695.

By setting the flag prior to deletion and checking for the flag upon receipt of a command to transmit the message to a client, transmission of the message to multiple clients can be avoided, even if the server receives an instruction to transmit the message to a second client before the message could be deleted at 695.

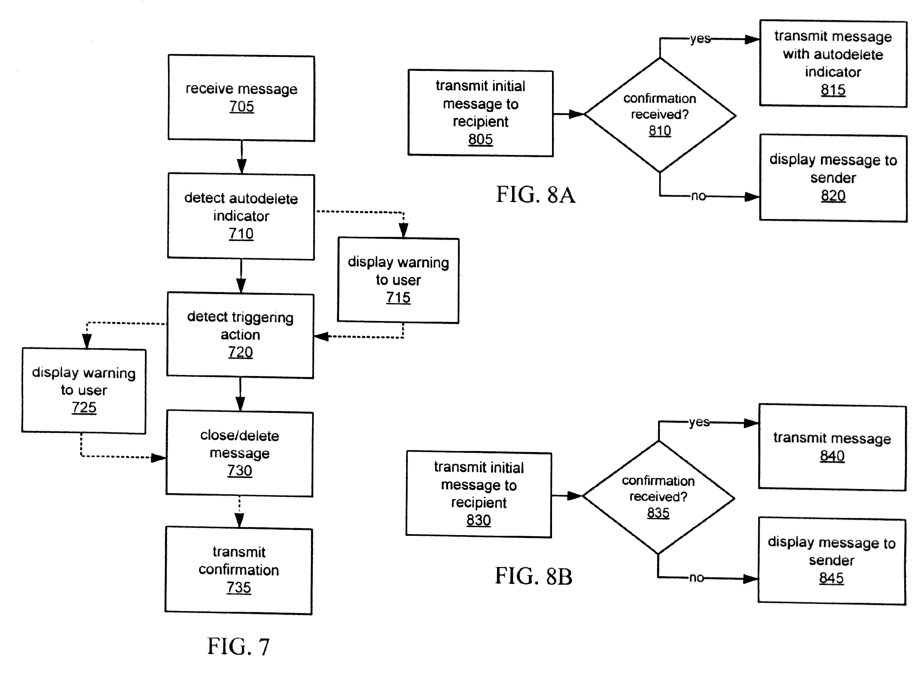

The operation of the mail client receiving the message is shown in FIG. 7. At 705, the mail client receives the message, for example as a result of the transmission 650 of FIG. 6C or 680 of FIG. 6D. At 710, the mail client checks for the deletion indicator, by parsing the header to find the appropriate field, by scanning the message body for a delimiter and indicator, or by parsing the envelope of the message received with the message itself. Checking for the deletion indicator may occur upon receipt of the message at 705, or at some point after receipt, for example upon detection of a user action such as opening the message in a viewing window on the recipient's communication device 100, or an attempt to preview the message in a reading pane in a mail client interface. Viewing the contents of the message represents a consumption of the message, in that the information is "consumed" by the recipient typically by reading the contents of the message. Checking for the deletion indicator may also be initiated by the detection of commands relating to other user consumption actions, such as a user command to reply to the sender; to reply to all recipients and senders; to forward the message; to close or move focus away from a view of the message contents; to copy all or part of the content of a message; to save the message to an archive or to export, save or move it to another folder or location at the communication device 100; or to print the message. While detection of user commands to engage in one of these actions may initiate checking for the deletion indicator in the message, the mail client may be configured to prevent some or all of these actions from being executed, as discussed below.

If the deletion indicator is detected in the message at 710, optionally, the mail client may be configured to warn the recipient that the message is set to be automatically deleted upon certain events at 715. However, in a further embodiment, the mail client may also be configured to comply with additional indicators in the message, causing the automatic deletion function to operate in a "stealth" mode, with no warning to the recipient that the message will be automatically deleted. For example, there may be a further stealth indicator inserted in the message at the time the deletion indicator is inserted, such as auto-delete-silent: yes or auto-delete-warning: no, which may be detected and interpreted by the mail client as an instruction not to caution the recipient that a consumption of the message will result in automatic deletion.

After the deletion indicator is detected, the mail client and/or operating system of the communication device 100 at which the mail client is operating awaits detection of a user consumption event that triggers the automatic deletion of the message. Upon detection of this triggering action or event, the message will be deleted, and if the message is currently displayed at the communication device 100, that display or view is closed. For example, if the message is currently being viewed at the communication device, a detection of an event in which the user closes the view, or moves focus away from the view of the message to bring another window or application into focus, is detected as a triggering event. As a result, the view of the message is closed (if the user did not already do this), and the message is deleted from storage and temporary memory of the communication device 100 at 730.

As another example, if the user invokes a command to reply to or forward the message, any view or display of the message that is currently displayed on the device 100 is closed, and the message deleted at 730. While the user may still reply to the sender and/or all recipients of the message, the mail client may be configured to not attach or append the content of the original message to the reply or forwarded message.

As a further example, if the user attempts to select and/or copy all or part of the content of a message associated with the deletion indicator, the invocation of the selection and/or copy command may interpreted as a triggering event, resulting in closing of any views of the message and deletion of the message at 730. Alternatively, the message client and/or the operating system may be configured to simply disable any copy functionality in the window or view displaying the message. Furthermore, the operating system may be configured to disable any printscreen or screen capture command that might be used to capture an image of the message displayed on the screen.

In addition, if the user invokes instructions to print, save, export, move, or archive the message, as described above, all or some of these instructions may comprise a triggering event, again resulting in closing of any views of the message on the device 100, and deletion of the message at 730.

Again, the mail client may be configured to issue a warning to the recipient at 725, prior to closing and/or deletion of the message at 730. The triggering event detected resulting in closing of any views of the message and deletion of the message may be the first of any such defined triggering events to be detected; that is to say, the recipient is not provided with the opportunity to open a message for reading, close the message, then open the message again for reading, forwarding or replying before the triggering event resulting in deletion of the message is detected. However, the mail client may be configured to provide the user, upon detection of a triggering event, with the option of proceeding with the action invoked by the user. For example, the mail client or operating system may detect that the user, having opened the message to read it, has initiated a command to move focus away from the message window and to another application or window displayed on the communication device 100. The mail client may then overlay a warning dialog box or message on the content displayed at the device, asking the user whether he or she wishes to proceed with that action, which will result in deletion of the message. If the user opts not to proceed, then the mail client or operating system may cancel execution of the action invoked by the user, and will continue to display the message and await a new detection of a triggering event at 720.

Finally, the mail client may optionally transmit an acknowledgment or confirmation message to the sender at 735 to confirm that the message was deleted at 730. This option may be configured at the recipient's mail client in accordance with an IT policy (for example, it may be configured to always transmit the confirmation, or to never transmit the confirmation), or it may be configured at the recipient's mail client with reference to a further indicator comprised in the message, which indicates whether a message confirming deletion should be sent to the sender. This further indicator may take a similar form to those described above; for example, the indicator may be represented by a header field reading auto-delete-confirm: yes, or some similar indicator.

The system described above may also be configured to allow the sender to determine, prior to sending a message, whether the recipient's mail client will automatically delete a message comprising the deletion indicator. Turning to FIG. 8A, prior to transmission of the message, for example after the sender of the message comprising the deletion indicator has invoked a command to send the message, but before actual transmission of the message occurs, an initial message is sent from the sender's mail client to the recipient at 805. The sender's mail client then awaits a confirmation message from the recipient's mail client at 810. The recipient's mail client may respond automatically to the initial message, without requiring the recipient to take any action to respond. The recipient's mail client may only send the confirmation message to confirm that it will comply with a deletion indicator, and may not send a response to the initial message at all if the recipient's mail client will not automatically delete messages as described above. Alternatively, the recipient's mail client may send a response message indicating that it will not comply with a deletion indicator. If the sender's mail client receives a confirmation message, then it may proceed to transmit a message with a deletion indicator at 815. Otherwise, the sender's mail client may display a warning to the sender that any messages sent to the recipient will not be automatically deleted after being read at 820, and may await a command from the sender to either send the message or cancel the message. The sender's client may wait for a predetermined period of time for receipt of the confirmation message, in case delivery of the confirmation message is delayed, before displaying the warning to the sender. The sender may then elect to send the message regardless of the fact that the recipient's mail client has indicated that it will not automatically delete the message.

In a further variant shown in FIG. 8B, the initial message sent at 830 may comprise an instruction to the recipient's mail client to automatically delete the next message received from the sender. If the sender's mail client receives confirmation at 835, then at 840 the message that is intended to be deleted by the recipient's mail client after consumption is transmitted. The message may comprise the deletion indicator as described above; alternatively, it may not comprise the deletion indicator at all, if the recipient's client is configured to automatically delete the next message received from the sender after receipt of the initial message. If the sender's mail client does not receive the confirmation message, then again at 845 the sender's client may display a warning to the sender that the next message may not be automatically deleted once received by the recipient at 845. The sender then may choose to send the message or not. In still a further variant, the sender may determine after a message is sent that he or she wishes for the message to be deleted once it has been subject to a consumption action at the recipient's client. In that case, the sender may transmit a follow-up message to the sent message, comprising an identifier of the previous message (for example, identifying the message by a unique identifier comprised in the sent message, or by header information such as timestamp, sender address, and/or subject line) and an instruction to the recipient's client to delete the identified message upon detection of a consumption action. If the recipient's client receives the follow-up message before the previous message is consumed, the recipient's client may carry out steps similar to FIG. 7, although there will be no autodelete indicator in the message itself. If the recipient's client receives the follow-up message after the previous message has been read or otherwise consumed at the recipient device, the recipient's client may still attempt to delete the previous message. In either case, the recipient's client may send a confirmation message to the sender if the deletion is successful.

Thus, by providing the ability to include a deletion indicator for transmission together with the message to the recipient's mail client, and by providing a mail client adapted to automatically delete messages having the deletion indicator, the sender of the message is afforded a measure of control over the recipient's user of the message once received at the recipient's mail client. The foregoing system and method may be used in the context of a message that is intended by the sender to be a "one time use" message, that is to say a message that the recipient is only expected to use once. For example, the sender may transmit sensitive information, such as personal information or financial information, such as a credit card number, in a message with the deletion indicator. The recipient will only have one opportunity to view and act on the message once received, for example to enter the credit card number in a virtual or physical card payment terminal to complete a transaction. After the card number is entered and the message closed, the message is automatically deleted so that the recipient cannot later use the information contained therein for another purpose.

By triggering the deletion of the message at the recipient mail client with a user action associated with a "consumption" of the message--i.e., a use of the information contained in the message content, such as displaying the message, a completion of the recipient's use of the message, such as moving focus away from the message or closing the message displayed at the device 100, or an attempt to preserve or make further use of the message, such as by saving or forwarding the message, and similar actions--the measure of control provided to the sender is a level of control that is not available in other solutions for automatically deleting or restricting access to messages. For example, if a mail message is sent with an expiration date, when received by a mail client that complies with the expiration date the message may be automatically deleted from the recipient's inbox on the expiration date. However, prior to that deletion, the recipient may have managed to forward or save a copy of the message content, or may have downloaded the message to several clients; the sender would not have control over how the recipient dealt with the message prior to the expiration date. By tying the automatic deletion to a consumption-related event, the sender may effectively impose some limitations on how the recipient may deal with the message.

The foregoing solution also provides a method for controlling access to or distribution of a message without requiring the sender to follow up with a further message or instruction, sent at a later time, to instruct the recipient client to delete the message. For the recipient, the foregoing solution also provides a system and method of managing an inbox by automatically deleting messages once they have been "consumed". Automatic deletion of the messages upon consumption allows the recipient client to reduce the amount of memory or storage space consumed at a recipient device for storage of received messages, without requiring the recipient to manually delete or otherwise file or move the messages received.

The solution described above may also be more convenient than other solutions. As another example, the sender may attempt to control access to a message by storing it on a server, and providing recipients with a password or key to access to the server and view the message. However, this requires maintenance of the server, and managing access to the server. Moreover, it requires that the recipient have access to the server at the time he or she wishes to view the message. The solution described above, however, allows the recipient to view the message while disconnected from a network.

By also providing a solution in which intermediate stations, such as routers and servers, likewise delete message, the sender's privacy in the message is enhanced. However, it may not be necessary to delete the message at each intermediate location if the message is packetized, and is not reconstructed at the intermediate location.

The systems and methods disclosed herein are presented only by way of example and are not meant to limit the scope of this application. Other variations of the systems and methods described above will be apparent to those in the art and as such are considered to be within the scope of this application.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A system adapted to handle a message (500), the system comprising:
means adapted to receive a message from a message server (268);
means adapted to store the message;
means adapted to determine that the message comprises an indicator that the message is to be deleted upon detection of a consumption-related triggering event;
means adapted to detect an occurrence of said triggering event; and
means adapted to delete the message upon detection of the occurrence of said triggering event.

2. The system of claim 1, wherein the triggering event comprises at least one of:
closing a display of the message at a communication device (100) in receipt of the message;
moving focus away from the display of the message at the communication device;
a command to reply to the sender of the message;
a command to forward the message;
a command to copy at least a part of a content of the message;
a command to save the message;
a command to move the message to another location at the communication device; or
a command to print the message.

3. The system of either claim 1 or 2, further comprising means adapted to display a warning at the communication device that the message will be automatically deleted upon detection of the occurrence of the triggering event.

4. The system of any one of claims 1 to 3, wherein the indicator comprises either a field in a header of the message, a delimited indicator in a body of the message, or a command in an envelope of the message.

5. The system of any one of claims 1 to 4, further comprising the message server (268), the message server being configured to:
receive said message;
determine whether said message has already been transmitted to a client associated with the recipient; and
if said message has not already been transmitted to said client,
transmit said message to said client;
determine that said message comprises said indicator;
set a flag indicating that said message has been transmitted to the client; and
delete said message.

6. A method of handling a message received and stored at a communication device (100), the method comprising:
determining that the message comprises an indicator that the message is to be deleted upon detection of a consumption-related triggering event (710);
detecting an occurrence of said triggering event (720); and
deleting the message upon detection of the occurrence of said triggering event (730).

7. The method of claim 6, further comprising displaying a warning at the communication device (715, 725) that the message will be automatically deleted upon detection of the occurrence of the triggering event.

8. The method of either claim 6 or 7, wherein the indicator comprises either a field in a header of the message, a delimited indicator in a body of the message, or an command in an envelope of the message.

9. A method of transmitting a message, comprising:
inserting an indicator into a message (600, 625), the indicator indicating that the message is to be deleted upon detection of a consumption-related triggering event; and
transmitting the message to a recipient (605, 615, 630).

10. The method of claim 9, wherein transmitting the message to the recipient comprises transmitting the message from a client communication device to a message server associated with the client communication device (605, 615), prior to forwarding the message to the recipient (630), and wherein the step of inserting occurs either at the client communication device (600) or at the message server (625).

11. The method of either claim 9 or 10, wherein transmitting the message to the recipient comprises:
transmitting (630) the message comprising the indicator to an intermediate station (550);
the intermediate station transmitting the message (650) comprising the indicator to a further station;
the intermediate station determining that the message comprises said indicator (655); and
the intermediate station deleting said message (660).

12. The method of any one of claims 9 to 11, further comprising:
receiving the message comprising the indicator at a message server associated with the recipient;
determining whether said message has already been transmitted to a client associated with the recipient (675);
if said message has not already been transmitted to said client,
transmitting said message to said client (680);
determining that said message comprises said indicator (685);
setting a flag indicating that said message has been transmitted to the client (690); and
deleting said message (695).

13. The method of any one of claims 9 to 12, further comprising, before transmitting the message to the recipient:
transmitting an initial message to the recipient (805, 830); and
receiving a confirmation message from the recipient communication device in response to the test message, indicating that the recipient communication device will delete a message comprising the indicator upon detection of the first consumption-related triggering event (810, 835).

14. The method of any one of claims 6 to 13, wherein the triggering event comprises at least one of:
closing a display of the message at the communication device;
moving focus away from the display of the message at the communication device;
a command to reply to the sender of the message;
a command to forward the message;
a command to copy at least a part of a content of the message;
a command to save the message;
a command to move the message to another location at the communication device; or
a command to print the message.

15. A signal-bearing medium comprising computer-executable code which, when executed, is operative to cause a computing device to carry out the methods of any one of claims 6 to 14.

## Amended claims

### Amended claims in accordance with Rule 137(2) EPC.

**1.** A system adapted to handle a message (500), the system comprising:
means adapted to receive a message;
means adapted to store the message;
means adapted to determine that the message comprises an indicator that the message is to be deleted upon detection of a consumption-related triggering event comprising moving focus away from display of the message at a recipient communication device;
means adapted to detect an occurrence of said triggering event; and
means adapted to delete the message upon detection of the occurrence of said triggering event.

**2.** The system of claim 1, further comprising means adapted to display a warning upon detection of the occurrence of the triggering event that the message will be automatically deleted.

**3.** The system of either claim 1 or 2, wherein the indicator comprises either a field in a header of the message, a delimited indicator in a body of the message, or a command in an envelope of the message.

**4.** The system of any one of claims 1 to 3, wherein the means adapted to receive the message, store the message, determine that the message comprises the indicator, detect the occurrence of the triggering event, and delete the message are comprised in the recipient communication device (100), the recipient communication device comprising a message client, the system further comprising a message server (268), the message server being configured to:
receive said message;
determine whether said message has already been transmitted to a first client; and
if said message has not already been transmitted to said first client,
transmit said message to said first client;
determine that said message comprises said indicator;
set a flag indicating that said message has been transmitted; and
delete said message after setting said flag.

**5.** The system of claim 4, wherein the message server is further configured to:
receive a command from a second client to transmit said message to the second client;
determine whether said flag is set; and
transmit said message to the second client if said flag is not set.

**6.** A method of handling a message received and stored at a communication device (100), the method comprising:
determining that the message comprises an indicator that the message is to be deleted upon detection of a consumption-related triggering event (710);
detecting an occurrence of said triggering event (720) comprising moving focus away from display of the message at a recipient communication device; and
deleting the message upon detection of the occurrence of said triggering event (730).

**7.** The method of claim 6, further comprising displaying a warning (715, 725) that the message will be automatically deleted upon detection of the occurrence of the triggering event.

**8.** The method of either claim 6 or 7, wherein the indicator comprises either a field in a header of the message, a delimited indicator in a body of the message, or an command in an envelope of the message.

**9.** A method of transmitting a message, comprising:
inserting an indicator into a message (600, 625), the indicator indicating that the message is to be deleted upon detection of a consumption-related triggering event comprising moving focus away from display of the message at a recipient communication device; and
transmitting the message to the recipient communication device (605, 615, 630).

**10.** The method of claim 9, wherein transmitting the message to the recipient communication device comprises transmitting the message from a client communication device to a message server associated with the client communication device (605, 615), prior to forwarding the message to the recipient communication device (630), and wherein the step of inserting occurs either at the client communication device (600) or at the message server (625).

**11.** The method of either claim 9 or 10, wherein transmitting the message to the recipient communication device comprises:
transmitting (630) the message comprising the indicator to an intermediate station (550);
the intermediate station transmitting the message (650) comprising the indicator to a further station;
the intermediate station determining that the message comprises said indicator (655);
and
the intermediate station deleting said message (660).

**12.** The method of any one of claims 9 to 11, further comprising:
receiving the message comprising the indicator at a message server;
determining, at the message server, whether said message has already been transmitted to a first client (675);
if said message has not already been transmitted to said first client,
transmitting said message to said first client (680);
determining that said message comprises said indicator (685);
setting a flag indicating that said message has been transmitted (690); and deleting said message (695) after setting said flag.

**13.** The method of claim 12, further comprising the message server:
receiving a command from a second client to transmit said message to the second client;
determining whether said flag is set; and
transmitting said message to the second client if said flag is not set.

**14.** The method of any one of claims 9 to 13, further comprising, before transmitting the message to the recipient communication device:
transmitting an initial message to the recipient communication device (805, 830); and
receiving a confirmation message from the recipient communication device in response to the test message, indicating that the recipient communication device will delete a message comprising the indicator upon detection of the first consumption-related triggering event (810, 835).

**15.** A signal-bearing medium comprising computer-executable code which, when executed, is operative to cause a computing device to carry out the methods of any one of claims 6 to 14.

**1.** A message server system comprising:
means adapted to receive a message comprising an indicator that the message is to be deleted upon detection of a consumption-related triggering event occurring at a recipient communication device in receipt of the message;
means adapted to, in response to a received command from a client communication device to transmit the message to the client communication device, determine whether a flag is set indicating that the message has already been transmitted to a client communication device;
means adapted to transmit the message in response to the received command if the flag has not been set;
means adapted to set the flag after transmitting the message;
means adapted to delete the message after setting the flag.

**2.** The message server system of claim 1, wherein the triggering event comprises at least one of:
closing a display of the message at the recipient communication device (100) in receipt of the message;
moving focus away from the display of the message at the recipient communication device;
a command to reply to a sender of the message;
a command to forward the message;
a command to copy at least a part of a content of the message;
a command to save the message;
a command to move the message to another location at the recipient communication device; or
a command to print the message.

**3.** The message server system of claim 2, wherein the triggering event comprises moving focus away from the display of the message at the recipient communication device.

**4.** The message server system of any one of claims 1 to 3, wherein the indicator comprises either a field in a header of the message, a delimited indicator in a body of the message, or a command in an envelope of the message.

**5.** The message server system of any one of claims 1 to 4, further comprising:
means adapted to insert the indicator into a message received from the client communication device (625).

**6.** The message server system of claim 5, further comprising:
means adapted to transmit said message received from the client communication device to an intermediate station (550);
means adapted to delete said message after said transmission.

**7.** A method for handling messages at a message server, the method comprising:
determining that a received message comprises an indicator that the message is to be deleted upon detection of a consumption-related triggering event occurring at a recipient communication device in receipt of the message;
transmitting the message to a client communication device;
upon transmitting the received message comprising the indicator to a first client communication device, setting a flag indicating that the message has been transmitted to a client communication device;
deleting the message at the message server system after setting said flag;
receiving a command from a further communication device to transmit the message to the futher communication device;
determining whether said flag is set, and if the flag is not set, transmitting said message to the further communication device.

**8.** The method of claim 7, wherein the triggering event comprises at least one of:
closing a display of the message at the recipient communication device (100) in receipt of the message;
moving focus away from the display of the message at the recipient communication device;
a command to reply to a sender of the message;
a command to forward the message;
a command to copy at least a part of a content of the message;
a command to save the message;
a command to move the message to another location at the recipient communication device; or
a command to print the message.

**9.** The method of claim 8, wherein the triggering event comprises moving focus away from the display of the message at the recipient communication device.

**10.** The method of any one of claims 7 to 9, wherein the indicator comprises either a field in a header of the message, a delimited indicator in a body of the message, or a command in an envelope of the message.

**11.** The message server system of any one of claims 7 to 10, further comprising:
inserting the indicator into a message received from the client communication device (625).

**12.** The method of claim 11, further comprising:
transmitting said message received from the client communication device to an intermediate station (550);
deleting said message after said transmission.

**13.** The method of claim 12, further comprising:
the intermediate station transmitting said message received from the client communication device (650) to a further station;
the intermediate station determining that the message comprises said indicator (655); and
the intermediate station deleting said message (660).

**14.** A signal-bearing medium comprising computer-executable code which, when executed, is operative to cause a computing device to carry out the methods of any one of claims 7 to 13.
